# EUROPÄISCHE PATENTSCHRIFT

(11) **EP 1 737 646 B1**
(45) Veröffentlichungstag und Bekanntmachung des Hinweises auf die Patenterteilung: **23.05.2007**
(21) Anmeldenummer: 05707863.6
(22) Anmeldetag: 27.01.2005
(51) Int. Cl.: B29C 67/00, B29C 67/04

(54) **VERFAHREN ZUR HERSTELLUNG VON DREIDIMENSIONALEN OBJEKTEN MITTELS LASERTECHNIK UND AUFTRAGEN EINES ABSORBERS PER INKJET-VERFAHREN**
METHOD FOR PRODUCING THREE-DIMENSIONAL OBJECTS USING LASER TECHNOLOGY AND BY APPLYING AN ABSORBER USING AN INK-JET METHOD
PROCEDE POUR PRODUIRE DES OBJETS TRIDIMENSIONNELS A L'AIDE D'UN LASER ET PAR APPLICATION D'UN ABSORBEUR AU MOYEN D'UNE TECHNIQUE D'IMPRESSION PAR JET D'ENCRE

(30) Priorität: 16.03.2004 DE 102004012682
(43) Veröffentlichungstag der Anmeldung: 03.01.2007
(73) Patentinhaber: Degussa GmbH, 40474 Düsseldorf (DE)
(72) Erfinder: MONSHEIMER, Sylvia, 45721 Haltern am See (DE); GREBE, Maik, 44805 Bochum (DE); GÖRING, Rainer, 46325 Borken (DE); BAUMANN, Franz-Erich, 48249 Dülmen (DE)
(86) Internationale Anmeldenummer: PCT/EP2005/050345
(87) Internationale Veröffentlichungsnummer: WO 2005/090055

(56) Entgegenhaltungen:
- EP-A- 1 459 871
- WO-A-01/38061
- WO-A-88/02677
- WO-A-20/05011959
- DE-A1- 19 918 981
- US-A1- 2002 105 114

## Beschreibung

Die Erfindung betrifft ein Verfahren zur Herstellung von dreidimensionalen Objekten aus einem pulverförmigen Substrat durch Verbinden, z. B. durch Verschmelzen oder Versintern von Teilen des Substrates, wobei das pulverförmige Substrat schichtweise aufgetragen wird und die zum Aufschmelzen des Substrates notwendige elektromagnetische Energie durch einen Laser mit einer Wellenlänge zwischen 100 und 3000 nm erzeugt wird und in einen Absorber eingeleitet und über diesen an die Teilbereiche des Substrates abgegeben wird. Diese Teilbereiche werden dadurch Schicht für Schicht aufgeschmolzen und verbinden sich nach dem Abkühlen zu dem gewünschten Formkörper.

Die zügige Bereitstellung von Prototypen ist eine in der jüngsten Zeit häufig gestellte Aufgabe. Im Stand der Technik werden zum einen die Methode der Stereolithographie beschrieben, wobei diese den Nachteil hat, dass aufwändige Stützkonstruktionen während der Anfertigung des Prototypen aus einer Flüssigkeit (Harz) notwendig sind und die erhaltenen Prototypen relativ schlechte mechanische Eigenschaften aufweisen, die auf die begrenzte Anzahl an Einsatzstoffen zurückzuführen sind.

Das andere im Stand der Technik häufig genannte Verfahren, welches gut für den Zweck des Rapid Prototyping geeignet ist, ist das selektive Laser-Sintern (SLS), welches bereits eine große Verbreitung gefunden hat. Bei diesem Verfahren werden Kunststoffpulver oder mit Kunststoff ummantelte Metall-, Keramik-, oder Sandpartikel in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren relativ schnell wieder zu einer festen Masse. Durch wiederholtes Belichten von immer neu aufgebrachten Schichten können mit diesem Verfahren komplexe dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6 136 948 und WO 96/06 881 (beide DTM Corporation) beschrieben. Die im Stand der Technik. beschriebenen SLS-Verfahren haben den Nachteil, dass für dieses Verfahren eine kostspielige Lasertechnik notwendig ist. Sowohl der als Energiequelle fungierende Laser als auch die für die Aufbereitung und Lenkung des Laserstrahls notwendigen optischen Einrichtungen wie Linsen, Aufweiter und Umlenkspiegel sind extrem teuer und empfindlich.

Nachteilig bei dem bekannten Verfahren ist jedoch, dass nicht alle am Markt verfügbaren Laser eingesetzt werden können. Um Kunststoffpulver oder mit Kunststoff ummantelte Partikel versintern zu können, ist ein CO2-Laser erforderlich, der teuer in der Anschaffung und aufwendig bezüglich Pflege, Handhabung und Wartung ist. Kennzeichnend für den CO2-Laser ist die Wellenlänge von 10600 nm; das entspricht dem Feminfrarotbereich. So muss ein aufwendiges Spiegelsystem verwendet werden, um den Laserstrahl über die Bauebene zu führen; ferner muß der Laser permanent gekühlt werden. Die Verwendung von Lichtwellenleitern ist nicht möglich. Es muss in der Regel eigens geschultes Personal für den Betrieb vorgehalten werden. Dadurch kommen solche Systeme für viele Endanwender nicht in Frage. Preiswertere Laser mit einer Wellenlänge im Mittel- oder Nahinfrarotbereich, im Bereich des sichtbaren Lichts, oder des Ultraviolettbereichs können aber nicht verwendet werden, da Kunststoffe in der Regel dadurch nicht bzw. nicht in einem für das Lasersintern erforderlichen Maß aufgeschmolzen werden können.

DE 199 18 981 offenbart ein Verfahren zur Herstellung eines dreidimensionalen Objektes mit selektivem Aufschmelzen von Bereichen einer Absorber enthaltenden Pulverschicht mittels Einbringung von Elektromagnetischer Energie durch Laser mit einer Wellenlänge zwischen 100 und 3000 nm, von dem sich der Gegenstand des erfindungsgemäßen Anspruchs 1 dadurch unterscheidet, daß der Absorber in einer Suspension oder eines flüssigen Absorbers per Injket-Verfahren selektiv auf die zu versinternden Bereiche aufgetragen wird.

WO-A-0138061 offenbart ein Verfahren zur Herstellung eines dreidimensionalen Objektes, wobei ein Inhibitor selektiv auf die nicht zu versinternden Bereiche aufgetragen wird. Die zu Pösende Aufgabe ist aber die Langsamheit des Verfahrens.

WO 2005/011959 A, das unter Artikel 54(3) EPÜ fällt, offenbart ein Verfahren zur Herstellung eines dreidimensionalen Objektes durch Bereiststellen einer Schicht eines pulverförmigen Substrates, wobei das Aufschmelzen von Bereichen der Pulverschicht mittels Infrarotstrahlung erfolgt, und wobei ein Absorber per Inkjet-Verfahren selektiv auf die zu versinternden Bereiche aufgetragen wird.

Aufgabe der vorliegenden Erfindung war es deshalb, ein Verfahren zu entwickeln, welches eine preisgünstigere Lösung zur Herstellung von lasergesinterten Prototypen ermöglicht.

Überraschenderweise wurde nun, wie in den Ansprüchen beschrieben, gefunden, dass Formteile durch ein Verfahren mit Lasern mit einer Wellenlänge zwischen 100 und 3000 nm hergestellt werden können, wenn selektiv auf die aufzuschmelzenden Bereiche der jeweiligen Schicht per InkJet-Verfahren ein spezieller Absorber aufgetragen wird, der die durch den Eintrag elektromagnetischer Energie entstandene Wärme an die zu versinternden Partikel weiterleitet. Der Laserstrahl kann wie üblich fokussiert werden. Zur Beschleunigung des Bauprozesses ist es jedoch vorteilhaft, einen nicht besonders fokussierten Laser zu verwenden, beispielsweise einen Diodenlaser, und die Selektivität allein durch die Auftragung des Absorbers zu erreichen. Die damit erzielbare Genauigkeit sowie die Schnelligkeit des Verfahrens sind gleich oder höher als beim konventionellen Lasersintern mit dem CO2-Laser. Das Verfahren ist deutlich kostengünstiger und einfacher und flexibler in der Handhabung. Es besteht außerdem die Möglichkeit, per Inkjet-Verfahren dem Endprodukt weitere Eigenschaften mitzugeben bzw. beim Herstellprozess mitzudrucken, wie beispielsweise leitfähige Bereiche oder Farben.

Die verwendeten Laser erzeugen elektromagnetische Strahlung mit einer Wellenlänge zwischen 100 und 3000 nm, bevorzugt zwischen 800 und 1070 nm oder zwischen 1900 und 2100 nm, und ganz besonders bevorzugt 800 bis 1000 nm (Diodenlaser) oder 1064 nm (Nd:YAG-Laser). Der Strahl kann entweder gepulst oder kontinuierlich (continous wave) sein. Besonders zu erwähnen sind, ohne die Erfindung darauf zu beschränken, Argon-Laser mit einer Wellenlänge von 488 und 514 nm, Helium-Neon-Laser mit einer Wellenlänge von 543, 633 bzw. 1150 nm, Stickstoff-Laser mit einer Wellenlänge von 337 nm, Wasserstofflaser mit einer Wellenlänge von 2600 bis 3000 nm, Krypton-Laser mit einer Wellenlänge von 330 bis 360 nm oder von 420 bis 800 nm, Rubin-Laser mit einer Wellenlänge von 694 nm, KTP-Laser (frequenzverdoppelter Nd:YAG-Laser) mit einer Wellenlänge von 532 nm, ein frequenzverdreifachter Nd:YAG-Laser mit einer Wellenlänge von 355nm oder ein frequenzvervierfachter Nd:YAG-Laser mit einer Wellenlänge von 266 nm, Alexandrite-Laser mit einer Wellenlänge von 755 nm, sowie YAG-Laser. Die YAG-Laser besitzen einen Yttrium-Aluminium-Garnet-Kristallstab als Lasermedium. Der Stab ist mit Seltenerdmetall wie beispielsweise Neodym (Nd:YAG, Wellenlänge 1060 nm), Erbium (Er:YAG, Wellenlänge 2940 nm), Holmium (Ho:YAG, Wellenlänge 2070 nm), oder auch Thulium (Tm, Wellenlänge 2074 nm) oder Chrom (Cr), oder Kombinationen daraus, dotiert. Andere Beispiele sind Tm:YLF-Laser oder Ho:YLF-Laser, die ein anderes Lasermedium verwenden und ebenfalls eine Wellenlänge von ca. 2000 nm aufweisen. Weiterhin können Diodenlaser mit einer hohen Leistung mit einer Wellenlänge zwischen 800 und 1000 nm sowie Excimer-Laser mit einer Wellenlänge von 193 nm oder 352 nm eingesetzt werden. Bei den Excimer-Lasern sind insbesondere F2-Excimerlaser mit einer Wellenlänge von 157 nm, ArF-Excimerlaser mit einer Wellenlämge von 193 nm, KrCl-Excimerlaser mit einer Wellenlänge von 222 nm, KrF-Excimerlaser mit einer Wellenlänge von 248 nm, XeCl-Excimerlaser mit einer Wellenlänge von 308 nm und XeF-Excimerlaser mit einer Wellenlänge von 351 nm zu nennen

Bei den Lasern kann es sich um Festkörperlaser (Beispiele sind der Rubin- bzw. der Nd:YAG-Laser), Halbleiterlaser, oder Gaslaser (zum Beispiel der Argon-Laser, der Helium-Neon-Laser oder der Krypton-Laser) oder um einen Faserlaser handeln.

Die verwendeten Laser können üblicherweise mit einer Leistung zwischen 1 und 1200 Watt, bevorzugt zwischen 10 und 500 Watt, und besonders bevorzugt zwischen 12 und 100 Watt, arbeiten. Der Fokus des Laserstrahls stellt eine wichtige Größe für die mit dem Verfahren erzielbare Bauteilauflösung dar. Üblicherweise liegt er im Radius zwischen 0,05 und 1 mm, bevorzugt zwischen 0,1 und 0,4 mm. Bei diesem Verfahren kann aber auch ein gröberer Fokus bzw. Strahlfleck vorteilhaft sein, da die Selektivität ja bereits durch den Absorber gegeben ist. Ein gröberer Fokus bzw. Strahlfleck läßt einen schnelleren Ablauf der Belichtung einer Schicht zu. Besonders bevorzugt sind die vom Diodenlaser her bekannten Barren, daß heißt, daß der Energieeintrag über eine rechteckige größere Fläche erfolgt. Dazu werden die einzelnen Diodenbarren zu sogenannten Stacks zusammengesetzt. Die Abmessungen der Fläche, über die die elektromagnetische Energie eingebracht wird liegt dann im Millimeter-, oder sogar im Zentimeter-Bereich. Dabei können die Abmessungen der rechtechigen Fläche beispielsweise zwischen 0,1 und 100 mm in der Breite betragen; in der Länge kann sie sich günstigerweise an der Bauraumtiefe des RP-Gerätes orientieren oder auch geringer sein, so daß die Baufläche quasi zeilenweise von dem Laserstrahl betrichen wird. Die Belichtungsgeschwindigkeit beträgt üblicherweise zwischen 10 und 10000 mm/s, bevorzugt zwischen 700 und 5000 mm/s. Gemeint ist damit die Geschwindigkeit mit der sich die Laserstrahlung über das Pulverbett bewegt; es kann entweder der Strahl beweglich sein, beispielsweise über Spiegel oder über flexible lichtleitende Kabel, oder aber das Pulverbett.

Um das erfindungsgemäße Polymerpulver Schicht für Schicht aufschmelzen zu können, müssen die Verfahrensparameter entsprechend ausgewählt werden. Beispielsweise spielt die Schichtdicke, die Laserleistung und Geschwindigkeit sowie die Wellenlänge des Lasers und das verwendete Pulver, und besonders der Absorber sowie die Menge des aufgetragenen Absorbers pro Flächeneinheit, unter anderem eine Rolle.
Es ist vorteilhaft, die Menge an Absorber den Bauteilgegebenheiten anzupassen; so kann beispielsweise in der Mitte einer Fläche weniger Absorber aufgetragen werden, besonders, wenn es schon einige darunterliegende aufgeschmolzenen Bereiche gibt. Ein weiterer Vorteil läßt sich erzielen, wenn die erste Schicht eines aufzuschmelzenden Bereiches anders mit Absorber belegt wird als die nachfolgenden.

Absorption ist definiert als eine Verminderung der Energie eines Strahls (Licht, Elektronen u. a.) beim Durchgang durch Materie. Die abgegebene Energie wird dabei in andere Energieformen, z. B. Wärme, umgewandelt. Dementsprechend ist ein Absorber ein Materiestück, bzw. Körper, der eine Strahlung absorbieren soll (aus www.wissen.de). In diesem Text soll als Absorber ein Additiv verstanden werden, welches Laserstrahlung im Bereich zwischen 100 und 3000 nm vollständig oder überwiegend absorbieren kann; dabei reicht es aus, wenn Teile des Absorbers diese Funktion erfüllen.

Gegenstand der vorliegenden Erfindung ist daher ein Verfahren zur Herstellung eines dreidimensionalen Objektes gemäß dem Anspruch 1. In einer bevorzugten Ausführungsform umfasst das Verfahren die Schritte
a) Bereitstellen einer Schicht eines pulverförmigen Substrates
b) Temperieren des Bauraumes
c) Auftragen eines Absorbers in einer Suspension oder eines flüssigen Absorbers per Inkjet-Verfahren selektiv auf die zu versinternden Bereiche
d) Auftragen weiterer spezieller Flüssigkeiten oder Suspensionen mit bestimmten Eigenschaften
e) Selektives Aufschmelzen von Bereichen der Pulverschicht mittels Einbringung von elektromagnetischer Energie durch Laser mit einer Wellenlänge zwischen 100 und 3000 nm, bevorzugt zwischen 800 und 1070 nm, und besonders bevorzugt mit einem YAG-Laser oder einem Diodenlaser
f) Abkühlen der geschmolzenen und nicht aufgeschmolzenen Bereiche auf eine Temperatur, die eine zerstörungsfreie Entnahme der Formteile ermöglicht
g) Entnahme der Formteile.

Die Schritte a) bis e) werden dabei solange wiederholt, bis das gewünschte Formteil Schicht für Schicht abgearbeitet worden ist. Schritt b) ist materialabhängig und damit optional. Schritt d) ist ebenfalls optional. Die Dicke der aufgetragenen Schicht liegt beispielsweise zwischen 0,05 und 2 mm, bevorzugt zwischen 0,08 und 0,2 mm.

Ein alternativer Ablauf ist, in der ersten Schicht den Schritt e) wegzulassen und ab der zweiten Schicht dann alternativ nach Schritt a) durchzuführen. Das führt zu einem Verschmelzen der Pulverpartikel genau in der Grenzschicht zwischen der obersten und der darunterliegenden Pulverschicht, was zu einer besonders guten Verbindung führt und außerdem das Verarbeitungsfenster vergrößert, da dadurch die Bildung von Curl (Aufrollen der Kanten oder Enden der aufgeschmolzenen Bereiche) weitgehend vermieden wird.

Ein weiterer alternativer Ablauf ist es, den Schritt e) nicht in jeder Schleife durchzuführen, sondern nur in Intervallen oder im Extremfall sogar nur einmalig unmittelbar vor Schritt f) und g).

Überraschenderweise wurde gefunden, dass es relativ einfach möglich ist, mittels Laser mit einer Wellenlänge zwischen 100 und 3000 nm, dreidimensionale Objekte aus pulverförmigen Substraten herzustellen, in dem auf eine Schicht aus einem pulverförmigen Substrat, welches die Energie der oben genannten Laser nicht oder nur schlecht absorbiert, ein Absorber aufweisendes Material auf die zu verbindenden Bereiche der Schicht aufgetragen wird, der die Laserenergie absorbieren kann und die absorbierte Energie in Form von Wärme an das ihn umgebende Substrat abgibt, wodurch das Substrat der Schicht bzw. gegebenenfalls einer darunter oder darüber liegenden Schicht in den genannten Bereichen durch Verschmelzen oder Versintern verbunden wird. Das Aufbringen des Absorbers und eventuellen weiteren Additiven kann mit einem Druckkopf mit einer oder mehreren Düsen, beispielsweise nach dem piezoelektrischen Effekt oder nach dem Bubble Jet-Prinzip arbeitend, ähnlich dem eines Tintenstrahldruckers, erfolgen. Die Energie des Lasers kann entweder fokussiert oder aber nicht fokussiert erfolgen, was einen Schnelligkeitsvorteil des Verfahrens bedeutet.

Eine Vorrichtung zur schichtweisen Herstellung von dreidimensionalen Objekten, gemäß dem Verfahren des Anspruchs 1 enthält
- eine bewegliche Vorrichtung zur schichtförmigen Auftragung eines pulverförmigen Substrates auf eine Arbeitsplattform oder auf eine gegebenenfalls schon auf der Arbeitsplattform vorhandene Schicht eines behandelten oder unbehandelten pulverförmigen Substrates (2),
- eine in der x,y- Ebene bewegliche Vorrichtung (3) zur Auftragung eines Absorber aufweisenden Materials (4) und evtl. weiteren Additiven auf ausgewählte Bereiche der Schicht aus pulverförmigem Substrat und
- einen Laser mit der Wellenlänge zwischen 100 und 3000 nm, bevorzugt zwischen 800 und 1070 nm oder zwischen 1900 und 2100 nm, wobei der Energieeintrag fokussiert oder nicht fokussiert sein kann, bevorzugt nicht fokussiert

Alternativ können Bewegungen der Vorrichtungen bzw. des Lasers und der Arbeitsplattform relativ zueinander auch von einer beweglichen Arbeitsplattform übernommen werden. Es ist ebenfalls möglich, die Relativbewegungen in x-Richtung durch die Arbeitsplattform zu realisieren, und die Bewegungen in y-Richtung von der jeweiligen Vorrichtung, bzw. dem Laser, oder umgekehrt.

Das erfindungsgemäße Verfahren hat den Vorteil, dass es einfacher, schneller, genauer und günstiger ist als herkömmliche Verfahren. Die gezielte Einwirkung von Energie an bestimmten Stellen der Schicht wird durch für Laser mit der Wellenlänge zwischen 100 und 3000 nm geeigneten Absorber erzielt, der auf den gewünschten Bereichen der Schicht aufgebracht wird.

Durch das erfindungsgemäße Verfahren ist ein schichtweiser automatisierter Aufbau eines dreidimensionalen Objektes durch Verwendung von Lasern mit einer Wellenlänge zwischen 100 und 3000 nm in Kombination mit einem geeigneten Absorber, einfach möglich. Nicht mit Absorber behandeltes Pulver kann einfach wiederverwendet werden. Außerdem können direkt spezielle Eigenschaften wie elektrische Leitfähigkeit oder Farben "mitgedruckt" werden. Dem Teil können auf diese Weise selektiv ausgewählte Eigenschaften mitgegeben werden.

Das Funktionsprinzip des vorliegenden erfindungsgemäßen Verfahrens zur Herstellung von dreidimensionalen Objekten basiert prinzipiell auf den bei allen anderen Verfahren zum Rapid-Prototyping verwendetem Prinzip. Das dreidimensionale Objekt wird schichtartig aufgebaut. Der Aufbau geschieht dadurch, dass Teile von Flüssigkeitsschichten (Stereolithographie) oder Pulverschichten (Lasersintern) miteinander bzw. mit Teilen von darunter liegenden Schichten verfestigt bzw. aufgeschmolzen werden, in dem diesen Teilen der Schichten Energie zugeführt wird. Die Teile der Schichten, denen keine Energie zugeführt wurde, liegen weiterhin als Flüssigkeit oder Pulver vor. Durch Wiederholen des Aufbringens und Aufschmelzens bzw. Verfestigens von Pulver bzw. Flüssigkeit wird schichtweise ein dreidimensionales Objekt erhalten. Nach Entfernen des nicht umgesetzten Pulvers bzw. der nicht umgesetzten Flüssigkeit wird ein dreidimensionales Objekt erhalten, dessen Auflösung (in bezug auf die Konturen) im Falle der Verwendung von Pulver unter anderem von der Schichtdicke und der Partikelgröße des verwendeten pulverförmigen Substrates abhängig ist

Im Unterschied zu den bislang bekannten Verfahren wird die Energie nicht direkt den zu verbindenden Substraten zugeführt, sondern über einen Absorber, der die Energie absorbiert und in Form von Wärmeenergie an das ihn umgebende Substrat abgibt. Dadurch wird die Bandbreite der zu verwendbaren pulverförmigen Substrate gegenüber herkömmlichem Lasersintern deutlich vergrößert. Die Energie wird dem Absorber im erfindungsgemäßen Verfahren in Form von Laserstrahlung mit einer Wellenlänge zwischen 100 und 3000 nm, bevorzugt zwischen 800 und 1070 oder zwischen 1900 und 2100 nm, zugeführt, welche von dem Absorber absorbiert, in Wärmenergie umgewandelt und an die direkten pulverförmigen Nachbarn des Substrates, welche nicht oder in nicht ausreichendem Maße in der Lage sind, die Strahlung der obengenannten Laser zu absorbieren, abgegeben wird. In nicht ausreichendem Maße bedeutet im vorliegenden Fall, dass durch Absorption von Strahlung durch einen Laser mit der Wellenlänge zwischen 100 und 3000 nm das pulverförmige Substrat nicht soweit erwärmt werden kann, dass es eine Verbindung durch Verschmelzen oder Versintern mit benachbarten Substratpartikeln eingehen kann bzw. die dazu benötigte Zeit sehr lang ist Die von dem Absorber abgegebene Wärme ist allerdings ausreichend, um das dem Absorber benachbarte pulverförmige Substrat mit sich selbst und auch dem Absorber durch Verschmelzen oder Versintern zu verbinden. Auf diese Weise werden mit dem erfindungsgemäßen Verfahren dreidimensionale Objekte durch Verschmelzen oder Versintern eines pulverförmigen Substrats hergestellt

Das Aufbringen der Absorber in Schritt c), der üblicherweise computergesteuert unter Verwendung von CAD-Anwendungen zur Berechnung der Querscbnittsflächen erfolgt, hat zur Folge, dass nur behandelte pulverförmige Substrate in einem nachfolgenden Behandlungsschritt e) aufgeschmolzen werden. Das Absorber aufweisende Material wird deshalb nur auf selektierte Bereiche der Schicht aus a) aufgebracht, die zum Querschnitt des zu erstellenden dreidimensionalen Objektes gehören. Das Aufbringen selbst kann z. B. durch einen mit einer oder mehrerer Düsen ausgestatteten Druckkopf erfolgen. Nach dem abschließenden Behandlungsschritt e) der letzten Schicht wird mit dem erfindungsgemäßen Verfahren eine Matrix mit teilweise verbundenem Pulvermaterial erhalten, die nach Abkühlen und Entfernen des nicht verbundenen Pulvers das massive dreidimensionale Objekt freigibt.

Das erfindungsgemäße Verfahren wird im folgenden beispielhaft beschrieben, ohne dass die Erfindung darauf beschränkt sein soll.

In einer bevorzugten Ausführungsform umfasst das Verfahren die Schritte
a) Bereitstellen einer Schicht eines pulverförmigen Substrates
b) Temperieren des Bauraumes
c) Auftragen eines Absorbers in einer Suspension oder eines flüssigen Absorbers per Inkjet-Verfahren selektiv auf die zu versinternden Bereiche
d) Auftragen weiterer spezieller Flüssigkeiten oder Suspensionen mit bestimmten Eigenschaften
e) Selektives Aufschmelzen von Bereichen der Pulverschicht mittels Einbringung von elektromagnetischer Energie durch Laser mit einer Wellenlänge zwischen 100 und 3000 nm, bevorzugt zwischen 800 und 1070 nm oder zwischen 1900 und 2100 nm, und besonders bevorzugt mit einem YAG-Laser oder einem Diodenlaser
f) Abkühlen der geschmolzenen und nicht aufgeschmolzenen Bereiche auf eine Temperatur, die eine zerstörungsfreie Entnahme der Formteile ermöglicht
g) Entnahme der Formteile

Die Schritte a) bis e) werden dabei solange wiederholt, bis das gewünschte Formteil Schicht für Schicht abgearbeitet worden ist. Schritt b) ist materialabhängig und damit optional. Schritt d) ist ebenfalls optional. Die Dicke der aufgetragenen Schicht liegt beispielsweise zwischen 0,05 und 2 mm, bevorzugt zwischen 0,08 und 0,2 mm

Ein alternativer Ablauf ist, in der ersten Schicht den Schritt e) wegzulassen und ab der zweiten Schicht dann alternativ nach Schritt a) durchzuführen. Das führt zu einem Aufschmelzen genau in der Grenzschicht zwischen der obersten und der darunterliegenden Pulverschicht, was zu einer besonders guten Verbindung führt und außerdem das Verarbeitungsfenster vergrößert, da dadurch die Bildung von Curl (Aufrollen der Kanten oder Enden der aufgeschmolzenen Bereiche) weitgehend vermieden wird

Das Bereitstellen der pulverförmigen Schicht kann z. B. durch Aufbringen eines Pulvermaterials als Substrat auf eine Bodenplatte bzw, falls bereits vorhanden auf eine schon vorhandene, gemäß Schritt b) bis e) behandelte Schicht erfolgen. Das Aufbringen kann durch Aufrakeln, Aufrollen, Aufschütten und anschließendes Abziehen oder ähnliche Verfahren erfolgen. Einzige Vorraussetzung, die das Bereitstellen der Schicht erfüllen muss, ist die, dass die Schicht eine gleichmäßige Höhe aufweist. Bevorzugt weist die in Schritt a) bereitgestellte Schicht eine Höhe von kleiner 3 mm, vorzugsweise von 20 bis 2000 µm und besonders bevorzugt von 80 bis 200 µm auf. Die Höhe der Schichten bestimmt dabei die Auflösung und damit die Glätte der äußeren Struktur des hergestellten dreidimensionalen Objekts. Die Bodenplatte oder aber die Apparatur zur Bereitstellung der Schicht kann in der Höhe beweglich ausgeführt sein, so dass nach der Durchführung eines Schrittes d) oder e) entweder die erhaltene Schicht um die Höhe der als nächstes aufzubringenden Schicht abgesenkt oder die Apparatur um die Höhe der nächsten Schicht gegenüber der vorangegangenen Schicht angehoben werden kann.
Bevorzugt als pulverförmiges Substrat eingesetztes Pulvermaterial weist eine mittlere Korngröße (d₅₀) von 10 bis 150 µm, besonders bevorzugt von 20 bis 100 µm und ganz besonders bevorzugt von 40 bis 70 µm auf. Je nach Verwendungszweck kann es aber auch vorteilhaft sein, ein Pulvermaterial einzusetzen, welches besonders kleine Partikel, aber auch besonders große Partikel aufweist. Zum Erzielen von dreidimensionalen Gegenständen mit möglichst hoher Auflösung und möglichst glatter Oberfläche kann es vorteilhaft sein, wenn Partikel eingesetzt werden, die eine mittlere Partikelgröße von 10 bis 45 µm, vorzugsweise von 10 bis 35 µm und ganz besonders bevorzugt von 20 bis 30 µm aufweist.

Feines Material kleiner 20 µm, insbesondere kleiner 10 µm ist kaum verarbeitbar, da es nicht rieselt, und die Schüttdichte drastisch sinkt, wodurch mehr Hohlräume entstehen können. Zur leichteren Handhabung kann es vorteilhaft sein, wenn Partikel eingesetzt werden, die eine mittlere Partikelgröße von 60 bis 150 µm, vorzugsweise von 70 bis 120 µm und ganz besonders bevorzugt von 75 bis 100 µm aufweist.

Als pulverförmiges Substrat wird vorzugsweise solches Pulvermaterial eingesetzt, welches durch Vermahlen, Fällen und/oder anionische Polymerisation oder durch Kombinationen davon, hergestellt Eine anschließende Fraktionierung und/oder Ausrüstung mit einer Rieselhilfe kann angeschlossen werden. Eine mechanische Nachbearbeitung, beispielsweise in einem schnellaufenden Mischer, zur Verrundung der beim Mahlen entstandenen scharfkantigen Partikel und damit zur besseren Auftragbarkeit dünner Schichten kann ebenfalls sinnvoll sein.

Die Korngrößenverteilung kann bei den angegebenen mittleren Korngrößen der Pulvermaterialien beliebig gewählt werden. Vorzugsweise werden Pulvermaterialien eingesetzt, die eine breite oder enge Korngrößenverteilung, vorzugsweise eine enge Korngrößenverteilung aufweisen; auch bimodale Kornverteilungen sind vorteilhaft. Besonders bevorzugte Pulvermaterialien für die Verwendung in dem erfindungsgemäßen Verfahren weisen eine Korngrößenverteilung auf, bei der die Ungleichmäßigkeit, die definiert ist als Differenz des D90- und des D10-Wertes, bezogen auf den D50-Wert, zwischen 0,05 und 15, bevorzugt zwischen 0,1 und 10, und besonders bevorzugt zwischen 0,5 und 5. Die Kornverteilung wird beispielsweise mittels Laserbeugung mit dem Malvem Mastersizer S ermittelt Die Korngrößenverteilung ist durch übliche Verfahren der Klassierung, wie z. B. Windsichten etc. einstellbar. Durch eine möglichst enge Korngrößenverteilung werden bei dem erfindungsgemäßen Verfahren dreidimensionale Objekte erhalten, die eine sehr gleichmäßige Oberfläche haben und, falls vorhanden, sehr gleichmäßige Poren aufweisen.

Zumindest ein Teil des eingesetzten pulverförmigen Substrates kann amorph, kristallin oder teilkristallin sein. Außerdem können aromatische Strukturen enthalten sein. Bevorzugtes Pulvermaterial weist eine lineare oder verzweigte Struktur auf. Besonders bevorzugtes Pulvermaterial, welches in dem erfindungsgemäßen Verfahren verwendet wird, weist zumindest zum Teil eine Schmelztemperatur von 50 bis 350 °C, vorzugsweise von 70 bis 200 °C auf.

Als Substrate eignen sich in dem erfindungsgemäßen Verfahren Stoffe, die im Vergleich zu dem gewählten Absorber schlechter von der Strahlung durch einen Laser mit der Wellenlänge zwischen 100 und 3000 nm erwärmt werden. Das eingesetzte pulverförmige Substrat sollte zudem eine ausreichende Fließfähigkeit im aufgeschmolzenen Zustand vorweisen. Als pulverförmige Substrate können insbesondere Polymere oder Copolymere, ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, Polylactide, thermoplastische Elastomere, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS) oder Gemische davon, eingesetzt werden.

Besonders bevorzugt wird im erfindungsgemäßen Verfahren ein Material als pulverförmiges Substrat eingesetzt, welches ein Polyamid, vorzugsweise zumindest ein Polyamid 6, Polyamid 11 und/oder Polyamid 12 oder ein Copolyester oder ein Copolyamid aufweist. Durch die Verwendung von Polyamiden lassen sich besonders formstabile dreidimensionale Formkörper herstellen. Besonders bevorzugt ist die Verwendung von Polyamid 12 Pulver, vorzugsweise hergestellt wie in DE 197 08 946 oder auch DE 44 21 454 beschrieben und besonders bevorzugt eine Schmelztemperatur und eine Schmelzenthalpie aufweisend wie in EP 0 911 142 angegeben. Sie können geregelt, teilgeregelt oder ungeregelt sein, bevorzugt ungeregelt. Sie können linear aliphatisch aufgebaut sein oder auch aromatische Bausteine aufweisen. Als bevorzugte Copolyamide oder Copolyester werden bevorzugt solche eingesetzt, wie sie unter dem Markennamen VESTAMELT bei der Degussa AG erhältlich sind. Besonders bevorzugte Copolyamide weisen eine Schmelztemperatur, bestimmt mittels Differential Scanning Calometrie (DSC) von 76 bis 159 °C, vorzugsweise von 98 bis 139 °C und ganz besonders bevorzugt von 110 bis 123 °C auf Die Copolyamide können z. B. durch Polymerisation von Gemischen von geeigneten Monomeren, z. B. ausgewählt aus Laurinlactam und/oder Caprolactam, als bifunktionelle Komponente, Korksäure, Azelainsäure, Dodecandisäure, Adipinsäure und/oder Sebacinsäure als Säurefunktion tragende Komponente und 1,6-Hexandiamin, Isophorondiamin und/oder Methyl-penta-methylen-diamin als Diamin hergestellt werden. Auch aromatische Bausteine sind können verwendet werden. Geeignete weitere Comonomere und Regeln zu ihrer Auswahl sind dem Fachmann bekannt und beispielsweise in J. G. Dolden, Polymer (1976, 17), pp 875-892 beschrieben.

Um eine bessere Verarbeitbarkeit der pulverförmigen Substrate zu erreichen, kann es vorteilhaft sein, dass ein Pulvermaterial eingesetzt wird, welches Additive aufweist Solche Additive können z. B. Rieselhilfen sein. Besonders bevorzugt weist das eingesetzte pulverförmige Substrat von 0,05 bis 5 Gew.-%, vorzugsweise von 0,1 bis 1 Gew.-% an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCO₃ oder ZnO sein. Pyrogene Kieselsäure wird beispielsweise unter dem Markennamen Aerosil^{®} von der Degussa AG angeboten. Es kann zudem vorteilhaft sein, wenn das eingesetzte pulverförmige Substrat bereits Absorber aufweist, jedoch nicht in einer Menge, die zum ungewollten Aufschmelzen nicht selektierter Bereiche führt. Geeignete Grenzen kann der Fachmann leicht durch orientierende Versuche feststellen.

Neben oder an Stelle von solchen zum Teil anorganischen Rieselhilfen oder anderen Additiven kann ein erfindungsgemäß eingesetztes pulverförmiges Substrat auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des dreidimensionalen Objektes verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.% und ganz besonders bevorzugt von 10 bis 40 Gew.-% an Füllstoffen auf.

Neben oder an Stelle von anorganischen Rieselhilfen oder Füllstoffen kann ein erfindungsgemäß eingesetztes pulverförmiges Substrat auch anorganische oder organische Pigmente aufweisen. Diese Pigmente können neben Farbpigmenten, die die Farberscheinung des zu erstellenden dreidimensionalen Körpers bestimmen, auch Pigmente sein, die andere physikalische Eigenschaften der herzustellenden dreidimensionalen Gegenstände beeinflussen, wie z. B. Magnetpigmente oder Leitfähigkeitspigmente, wie z. B. leitfähig modifiziertes Titandioxid oder Zinnoxid, die den Magnetismus bzw. die Leitfähigkeit des Gegenstandes verändern. Besonders bevorzugt weist das einzusetzende Pulvermaterial aber anorganische oder organische Farbpigmente, ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmente, Perlglanzpigmente, Leuchtpigmente mit Fluoreszenz- und/oder Phosphoreszenzpigmenten, Umbra, Gummigutt, Knochenkohle, Kasseler Braun, Indigo, Chlorophyll, Azofarbstoffe, Indigoide, Dioxazinpigmente, Chinacridonpigmente, Phthalocyaninpigmente, Isoindolinonpigmente, Perylenpigmente, Perinonpigmente, Metallkomplexpigmente, Alkaliblaupigmente und Diketopyrrolopyrrol auf. Weitere Informationen zu einsetzbaren Pigmenten können z. B. Römpp Lexikon Chemie - Version 2.0, Stuttgart/New York: Georg Thieme Verlag 1999 sowie der dort angegebenen Literatur entnommen werden. Die Kontentration dieser Pigmente im Pulver muß aber so gewählt sein, daß sie allenfalls zu einer geringen Absorption der eingetragenen Energie führt; sie muß unterhalb der Schwelle liegen, bei der die Pulverpartikel durch die ihnen übertragenen Wärme versintern.

Als Pulvermaterial können auch Substanzen eingesetzt werden, die als Sonderform der oben genannten Füllkörper oder Pigmente betrachtet werden können. Bei dieser Art des Pulvermaterials weist das Pulver Körner aus einem ersten Material mit einer Größe, die kleiner als die oben genannten Dimensionen für das Pulvermaterial ist, auf. Die Körner sind beschichtet mit einer Schicht eines zweiten Materials, wobei die Dicke der Schicht so gewählt ist, dass das Pulvermaterial aus Kombination von Korn des ersten Materials und Beschichtung mit dem zweiten Material eine Größe wie oben angegeben aufweist. Die Körner des ersten Materials weisen vorzugsweise eine Größe auf, die eine Abweichung von der Größe des Pulvermaterials von weniger als 25 %, vorzugsweise weniger als 10 % und besonders bevorzugt weniger als 5 % aufweist. Das zweite Material, welches die Beschichtung der Körner darstellt, ist ein Material, welches im Vergleich zu dem gewählten Absorber schlechter von der Strahlung durch den Laser mit einer Wellenlänge zwischen 100 und 3000 nm erwärmt wird. Das zweite Material sollte zudem eine ausreichende Fließfähigkeit im erwärmten Zustand vorweisen und sich durch Wärmeeinwirkung, wobei die Wärme vom Absorber bereitgestellt wird, versintern oder verschmelzen lassen. Als Beschichtungsmaterial können die pulverförmigen Substrate (die Pulvermaterialien) insbesondere die oben genannten Polymere oder Copolymere, vorzugsweise ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methyhnethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS) oder Gemischen davon, oder Phenolharze aufweisen. Das erste Material dieser Sonderform des Pulvermaterials kann Körner z.B. aus Sand, Keramik, Metall und/oder Legierungen umfassen. Besonders bevorzugtes Pulvermaterial dieser Art ist mit Phenolharz oder thermoplastischem Kunststoff beschichteter Sand, sogenannter Formsand.

Wenn der Absorber in der Lage ist, eine ausreichende Wärmemenge zu übertragen, ist es ebenso möglich, als Pulvermaterial Metallpulver, insbesondere Pulver von niedrigschmelzenden Metallen, wie z. B. Blei oder Zinn oder Legierungen, die z. B. Zinn oder Blei aufweisen, einzusetzen. Auch dieses Pulvermaterial weist vorzugsweise die oben genannten Dimensionen auf. Bei der Verwendung von Metallpulver ist zunächst zu prüfen, ob das Metall für eine Behandlung mit Laser mit einer Wellenlänge zwischen 100 und 3000 nm geeignet ist oder ob es zu Funkenbildung oder anderen Störungen kommt. Eine solche Überprüfung ist durch einfache Vorversuche möglich.

Mit dem erfindungsgemäßen Verfahren sind also dreidimensionale Objekte herstellbar, die mit einer oder mehreren funktionalisierten Schichten ausgerüstet werden können. Beispielsweise kann eine Funktionalisierung, wie z. B. die Ausrüstung mit leitfähigen Eigenschaften des ganzen Formteils oder aber auch nur bestimmter Bereiche durch Auftragen entsprechender Pigmente oder Substanzen analog zum Absorber oder durch Bereitstellen einer Schicht aus einer pulverförmigen Substanz, die diese Pigmente aufweist, erfolgen.

Das Aufbringen des Absorbers kann analog zu der in WO 01/38061 beschriebenen Aufbringung des Inhibitors erfolgen. Vorzugsweise erfolgt das Aufbringen des Absorbers mit einer in x,y-Ebene beweglichen Vorrichtung. Die Vorrichtung weist eine Möglichkeit auf, flüssige und/oder pulverförmige Absorber an definierten Stellen der gemäß Schritt a) bereitgestellten Schicht an diese abzugeben. Die Vorrichtung kann z. B. ein Druckkopf mit einer oder mehreren Düsen, wie er in einem Tintenstrahldrucker eingesetzt wird, sein. Die Ansteuerung der Vorrichtung zur Positionierung des Druckkopfes kann ebenfalls in gleicher Weise wie die Ansteuerung des Druckkopfes eines Tintenstrahldruckers erfolgen. Mit dieser Vorrichtung wird der Absorber an den Stellen der gemäß Schritt a) bereitgestellten Schicht aufgebracht, an denen das Substrat durch Versintern oder Verschmelzen verbunden werden solL
Im erfindungsgemäßen Verfahren können alle Absorber eingesetzt werden, die durch elektromagnetische Strahlung eines Lasers mit einer Wellenlänge zwischen 100 und 3000 nm erwärmt werden.

Im einfachsten Fall weist der Absorber ein sogenanntes Farbmittel auf. Unter einem Farbmittel versteht man alle farbgebenden Stoffe nach DIN 55944, welche in anorganische und organische Farbmittel sowie in natürliche und synthetische Farbmittel einteilbar sind (s. Römpps Chemielexikon, 1981, 8. Auflage, S 1237). Nach DIN 55943 (Sept. 1984) und DIN 55945 (Aug. 1983) ist ein Pigment ein im Anwendungsmedium praktisch unlösliches, anorganisches oder organisches, buntes oder unbuntes Farbmittel. Farbstoffe sind in Lösemitteln und/oder Bindemitteln lösliche anorganische oder organische, bunte oder unbunte Farbmittel.

Der Absorber kann aber auch seine absorbierende Wirkung dadurch erhalten, daß er Zusatzstoffe aufweist. Das können beispielsweise Flammschutzmittel auf der Basis von Melamincyanurat sein (Melapur von der DSM), oder auf der Basis von Phosphor, bevorzugt Phosphate, Phosphite, Phosphonite, oder elementarer roter Phosphor. Ebenfalls als Zusatzstoff geeignet sind Kohlenstofffasern, bevorzugt gemahlen, Glaskugeln, auch hohl, oder Kaolin, Kreide, Wollastonit, oder Graphit

Der im erfindungsgemäßen Pulver enthaltene Absorber weist bevorzugt Ruß oder KHP (Kupferhydroxidphoshat) oder Kreide, Knochenkohle, Kohlenstofffasern, Graphit, Flammschutzmittel oder Interferenzpigmente als Hauptkomponente auf. Interferenzpigmente sind sogenannte Perlglanzpigmente. Auf Basis von dem natürlichen Mineral Glimmer werden sie mit einer dünnen Schicht aus Metalloxiden, zum Beispiel Titandioxid und/oder Eisenoxid umhüllt und stehen mit einer mittleren Korngrößenverteilung zwischen 1 und 60 µm zur Verfügung. Interferenzpigmente werden beispielsweise von der Fa. Merck unter dem Namen Iriodin angeboten. Die Iriodinpalette von Merck umfasst Perlglanzpigmente und metalloxidbeschichtebe Glimmerpigmente sowie die Unterklassen: Interferenzpigmente, Metallglanz-Effektpigmente (Eisenoxidbeschichtung des Glimxnerkerns), Silberweiß-Effektpigmente, Goldglanzeffektpigmente(mit Titandioxid und Eisenoxid beschichteter Glimmerkern). Besonders bevorzugt ist die Verwendung von Iriodintypen der Iriodin-LS-Reihe, namentlich Iriodin LS 820, Iriodin LS 825, Iriodin LS 830, Iriodin LS 835 und Iriodin LS 850. Ganz besonders bevorzugt ist die Verwendung von Iriodin LS 820 und Iriodin LS 825.

Daneben eignen sich ebenfalls: Glimmer bzw. Glimmerpigmente, Titandioxid, Kaolin, organische und anorganische Farbpigmente, Antimon(III)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lantanhexachlorid, ClearWeld® (WO 0238677) sowie kommerziell erhältliche Flammschutzmittel, welche Melamincyanurat oder Phosphor, bevorzugt Phosphate, Phosphite, Phosphonite oder elementaren (roter) Phosphor, aufweisen.

Wenn eine Störung der Eigenfarbe des Formkörpers vermieden werden soll, weist der Absorber bevorzugt Interferenzpigmente, besonders bevorzugt aus der Iriodin LS-Reihe von Merck, oder Clearweld®, aus.

Die chemische Bezeichnung für das KHP ist Kupferhydroxidphosphat; dieses wird als hellgrünes, feines kristallines Pulver mit einem mittleren Korndurchmesser von knapp 3 µm eingesetzt.

Der Ruß kann nach dem Furnaceraßverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 m²/g, bevorzugt zwischen 70 und 400 m²/g. Die Rußpartikel können zur Einstellung von Oberflächenfunktionalitäten oxidativ nachbehandelt sein. Sie können hydrophob (beispielsweise Printex 55 oder Flammruß 101 der Degussa) oder hydrophil (beispielsweise Farbruß FW20 oder Printex 150 T der Degussa) eingestellt sein. Sie können hochstruktiuiert oder niederstrukturiert sein; damit wird ein Aggregationsgrad der Primärteilchen beschrieben. Durch die Verwendung spezieller Leitfähigkeitsruße kann die elektrische Leitfähigkeit der aus dem erfindungsgemäßen Pulver hergestellten Bauteile eingestellt. werden. Durch die Verwendung von geperlten Rußen kann eine bessere Dispergierbarkeit sowohl bei den nassen als auch bei den trockenen Mischverfahren genutzt werden. Auch die Verwendung von RuBdispersionen kann von Vorteil sein.

Knochenkohle ist ein mineralisches Schwarzpigment, welches elementaren Kohlenstoff enthält. Sie besteht zu 70 bis 90 % aus Calciumphosphat und zu 30 bis 10 % aus Kohlenstoff. Die Dichte liegt typischerweise zwischen 2,3 und 2,8 g/ml.

Die Absorber können beispielsweise als Granulat, oder als Pulver oder als Flüssigkeit vorliegen. Da es für die Verteilung in einem Druckkopf mit einer oder mehreren feinen Düsen von Vorteil ist, wenn die Partikel möglichst fein sind, können zu grobe Partikel oder Granulate vermahlen oder nachgemahlen werden, bevorzugt bei tiefen Temperaturen, und evtl. anschließend klassiert werden.

Solche Additive, die hier als Absorber verwendet werden, sind beispielsweise bei der Firma Merck unter dem Namen Iriodin® erhältlich. Mit Ruß sind handelsübliche Standardruße gemeint, wie sie beispielsweise von den Firmen Degussa AG, Cabot Corp., oder Continental Carbon angeboten werden.

Kommerziell erhältliche Beispiele für geeignete Absorber im allgemeinen sind Iriodin® LS 820 oder Iriodin® LS 825 oder Iriodin® LS 850 der Firma Merck Als Beispiel für den Ruß mag Printex 60, Printex A, Printex XE2, oder Printex Alpha der Firma Degussa dienen. Geeignetes KHP wird ebenfalls von der Firma Degussa unter dem Markennamen Vestodur FP-LAS angeboten.

Um in einem Druckkopf ähnlich wie eine Tinte auf das pulverförmige Substrat auftragbar zu sein, ist es von Vorteil, eine den Absorber enthaltende Flüssigkeit herzustellen. Es ist möglich, Mischungen von festen, flüssigen oder festen und flüssigen Absorber einzusetzen. Ebenfalls kann es vorteilhaft sein, als Feststoffe vorliegende Absorber in Flüssigkeiten zu suspendieren, die keine Absorber sind, um eine bessere Verteilung der als Feststoff vorliegenden Absorber über die gesamte Höhe der bereitgestellten Schicht zu erreichen. Auch der Zusatz von speziellen rheolgischen Zusatzstoffen, die eine Sedimenation des festen Absorbers in der Flüssigkeit verhindern, ist von Vorteil. Ein weiterer Vorteil kann erzielt werden, wenn zur besseren Benetzung des Substrates der Absorber, insbesondere der flüssige Absorber oder die Suspension eines festen Absorbers in einer Flüssigkeit mit Tensiden wie beispielsweise Alkylphenolethoxilate, Fettalkoholethoxilate, Fettsäureethoxilate, Fettaminethoxilate, versehen wird. Die Flüssigkeit kann - ohne die Erfindung darauf einschränken zu wollen - Wasser, bevorzugt destilliert, oder Alkohole, beispielsweise Isopropanol, Glycerin, Diethylenglycol, enthalten.

Besonders vorteilhaft kann die Verwendung von kommerziell erhältlichen Dispersionen sein, beispielsweise aus der Serie Derussol der Degussa.

Ebenfalls vorteilhaft ist die Verwendung von flüssigem Absorber, beispielsweise Clearweld®.

In diesem erfindungsgemäßen Verfahren sind außerdem viele Absorber/Substrat Kombinationen denkbar, wobei für das Verfahren ein ausreichend großer Unterschied von Absorber und Substrat in der Fähigkeit durch die Strahlung des Lasers mit einer Wellenlänge zwischen 100 und 3000 nm angeregt zu werden wichtig ist, damit am Ende des Verfahrens eine Matrix erhalten wird, die eine klare Grenze zwischen aufgeschmolzenen (also mit Absorber behandeltem) Substrat und nicht aufgeschmolzenen Substrat erreicht wird. Nur auf diese Weise ist sichergestellt, dass das erstellte dreidimensionale Objekt eine ausreichend glatte Kontur aufweist und von dem nicht verbundenen Substrat einfach gelöst werden kann. Die Genauigkeit des Verfahrens ist dem des Lasersinterns beispielsweise überlegen, da die Energie sehr viel gezielter eingebracht werden kann.

Um eine ausreichend große und lange Wärmeübertragung von Absorber auf das Substrat zu ermöglichen, sollte der Siedepunkt der Absorbers oder bei einem Gemisch von Absorbern zumindest eines Absorbers größer als der Schmelzpunkt des verwendeten Substrates sein. Die Dosierung der Absorber enthaltenden Flüssigkeit sowie die Eigenschaften der Pulvers und des Absorbers sowie der Flüssigkeit im Ganzen müssen aufeinander abgestimmt sein, damit der Absorber, insbesondere bei Einsatz eines flüssigen Absorbers, nicht durch die Schichten verläuft, sondern ausschließlich von den zu benetzenden Pulverbereichen aufgenommen wird. Die Abstimmung kann z. B. durch das Einstellen der Viskosität und die verwendete Menge der Absorber enthaltenden Flüssigkeit erfolgen. Dabei ist die Menge der verwendeten Flüssigkeit insbesondere von der Schichtdicke des Pulvers, von der Porosität des Pulvers und von der Teilchengröße und dem Anteil an flüssigem oder festen Absorber abhängig. Für die einzelnen Materialkombinationen kann die optimale Menge und Viskosität in einfachen Vorversuchen ermittelt werden. Zur Einstellung der Viskosität können bekannte Viskositätsvermittler, wie pyrogene Kieselsäuren, aber auch organische Mittel verwendet werden. Außerdem ist es von Vorteil, wenn die den Absorber enthaltende Flüssigkeit Netzmittel und/oder Biozide und/oder Feuchthaltemittel aufweist Die Flüssigkeit kann beispielsweise Wasser, vorzugsweise destilliert, oder Lösemittel oder Alkohole aufweisen. Der Absorber bzw. die Absorber enthaltende Flüssigkeit kann in der Schmelze bzw. im Formkörper verbleiben. Das kann im Fall von Verstärkung oder bei der Einstellung anderer Eigenschaften durch den Absorber (elektrische oder magnetische Leitfähigkeit) sogar von Vorteil sein. Die Trägerflüssigkeit, falls eine verwendet wurde, verbleibt entweder ebenfalls im Bauteil oder verdunstet oder verdampft. Vorteilhaft handelt sich bei den verwendeten Absorbern, Flüssigkeiten und sonstigen Zusatzstoffen um nicht toxische Stoffe, die eine problemlose Handhabung in Büroumgebung ermöglichen.

Die für die Erwärmung des Absorbers notwendige Energie wird in Form von elektromagnetischer Strahlung im Bereich zwischen 100 und 3000 nm, bevorzugt zwischen 800 und 1070 oder zwischen 1900 und 2100 nm, zugeführt. Es kann vorteilhaft sein, die zu versinternden Schichten durch Zuführung von Wärme auf eine erhöhte Temperatur zu bringen oder auf einer erhöhten Temperatur zu halten, die unterhalb der Schmelz- oder Sintertemperatur des eingesetzten Polymers liegt. Auf diese Weise kann die zum selektiven Aufschmelzen benötigte elektromagnetische Energie verringert werden. Das setzt das Vorhandensein eines temperierten Baufeldes voraus, verringert jedoch die Wahrscheinlichkeit für das Auftreten des Curls (Aufrollen der Ecken und Kanten aus der Bauebene heraus, was ein erneutes Durchführen des Schrittes a) unmöglich machen kann). Ebenso kann es vorteilhaft sein, wenn der Absorber bzw. die den Absorber enthaltende Flüssigkeit vorgewärmt wird.

Die für das erfindungsgemäße Verfahren erforderliche Strahlung wird durch einen Laser, der elektromagnetische Strahlung im Bereich zwischen 100 und 3000 nm emittiert, erzeugt. Das können Laser sein wie oben beschrieben, deren Strahl meist fokussiert wird, beispielsweise mit Spiegeln, Linsen, und/oder Lichtleitfasern. Es können aber auch Laser sein, die nicht unbedingt einen fokussierten Laserstrahl abgeben wie zum Beispiel Diodenlaser, die durch Zusammensetzen von Diodenbarren in Stacks auch größere, meist rechteckige Flächen in ausreichender Leistung bestrahlen können.

Bei dem vorliegenden Verfahren ist jedoch eine nicht fokussierte oder sogar flächige Energieeinbringung durchaus von Vorteil, da die Selektivität der jeweiligen Schicht ja bereits über den selektiv per Inkjet-Verfahren aufgebrachten Absorber bzw. der Absorber enthaltenden Flüssigkeit erfolgt. Das Verfahren wird dadurch schneller.

Mittels des erfindungsgemäßen Verfahrens sind dreidimensionale Formkörper herstellbar. Diese schichtweise hergestellten dreidimensionalen Objekte liegen am Ende nach Abschluss des erfindungsgemäßen Verfahrens in einer Matrix, die aus mehreren Schichten gebildet wird, vor. Aus dieser Matrix, die aus verbundenem und nicht verbundenem pulverförmigen Substrat sowie Absorber besteht, kann das Objekt entnommen werden, während das nicht verbundene Substrat, gegebenenfalls nach einer Aufarbeitung z. B. durch Sieben, erneut eingesetzt werden kann. Die erfindungsgemäßen Formkörper können Füllkörper, ausgewählt aus Glaskugeln, Kieselsäuren oder Metallpartikeln aufweisen.

Das erfindungsgemäße Verfahren wird vorzugsweise in einer Vorrichtung zur schichtweisen Herstellung von dreidimensionalen Objekten durchgeführt, die
- eine bewegliche Vorrichtung zur schichtförmigen Auftragung eines pulverförmigen Substrates auf eine Arbeitsplattform oder auf eine gegebenenfalls schon auf der Arbeitsplattform vorhandene Schicht eines behandelten oder unbehandelten pulverförmigen Substrates (2),
- eine in der x,y- Ebene bewegliche Vorrichtung (3) zur Auftragung eines Absorber aufweisenden Materials (4) und evtl. weiteren Additiven auf ausgewählte Bereiche der Schicht aus pulverförmigem Substrat und
- einen Laser mit der Wellenlänge zwischen 100 und 3000 nm, bevorzugt zwischen 800 und 1070 nm oder zwischen 1900 und 2100 nm, wobei der Energieeintrag fokussiert oder nicht fokussiert sein kann, bevorzugt nicht fokussiert,
aufweist

Alternativ können Bewegungen der Vorrichtungen bzw. des Lasers und der Arbeitsplattform relativ zueinander auch von einer beweglichen Arbeitsplattform übernommen werden. Es ist ebenfalls möglich, die Relativbewegungen in x-Richtung durch die Arbeitsplattform zu realisieren, und die Bewegungen in y-Richtung von der jeweiligen Vorrichtung, bzw. dem Laser, oder umgekehrt.

Die Vorrichtung ist vorzugsweise mit mehreren Vorratsbehältern ausgerüstet, aus denen das zu verarbeitende pulverförmige Substrat der Vorrichtung zur Erzeugung der Schichten zugeführt werden kann und der oder die eingesetzten Absorber der Vorrichtung zur Auftragung eines Absorbers auf ausgewählte Bereiche der Schicht aus pulverförmigem Substrat zugeführt werden kann. Durch Verwendung von Druckköpfen mit einer oder mehreren Düsen und dem Vorsehen eines Mischers kann erreicht werden, dass an bestimmten Zonen der Schicht, z. B. an besonders filigranen Bereichen oder z. B. am Rand des zu erstellenden Objektes eine andere Mischungen von Absorber als im Kernbereich des zu erstellenden Objektes eingesetzt werden. Auf diese Weise kann eine unterschiedliche Energiezufuhr an unterschiedlichen Positionen der Schicht erzeugt werden.

Ein Pulvermaterial wie vorab beschrieben, welches zum Einsatz in dem erfindungsgemäßen Verfahren geeignet ist, weist eine mittlere Korngröße von 10 bis 150 µm und zumindest ein Polymer oder Copolymer, ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methyhnethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS) oder Gemische davon, auf.

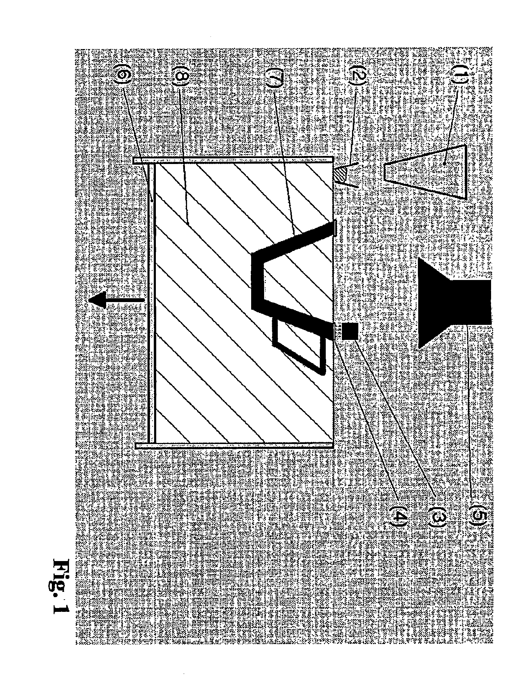

Das erfindungsgemäße Verfahren und die Vorrichtung zur Durchführung des Verfahrens wird an Hand der Figur 1 näher erläutert, ohne dass die Erfindung auf diese Ausführungsform beschränkt sein soll. Fig. 1 gibt schematisch die Vorrichtung wieder. Auf einem beweglichen Boden (6), wird unbehandeltes pulverförmiges Substrat (2), welches in einem Vorratsbehälter (1) vorgelegt wird, zu einer Matrix (8) aufgebaut. Das Substrat wird mittels eines Rakels (2) zu dünnen Schichten auf dem beweglichen Boden bzw. zuvor aufgebrachten Schichten verteilt

Über eine in x,y- Ebene bewegliche Vorrichtung (3) wird der Absorber (4) bzw. die Absorber enthaltende Flüssigkeit auf ausgewählte Bereiche der Schicht aus pulverförmigem Substrat aufgebracht Nach jeder Behandlung mit einem Absorber wird eine neue Schicht des pulverförmigen Substrates aufgebracht Mittels Energieeintrag in einer Wellenlänge zwischen 100 und 3000 nm durch einen Laser oder eine andere Energiequelle (5), werden die Stellen des aufgebrachten Substrats, die mit dem Absorber behandelt wurden, zu einem dreidimensionalen Objekt, wie z. B. einer Tasse (7) verbunden. Dieser Schritt kann auch vor dem Auftrag der nächsten Pulverschicht erfolgen.

Das erfindungsgemäße Verfahren wird an Hand der nachfolgenden Beispiele näher erläutert, ohne dass die Erfindung auf diese beschränkt sein soll.

### Beispiel 1: Herstellung eines Plättchens aus einem Copolyamid mittels Diodenlaser

In der durch Fig. 1 beschriebenen Vorrichtung wird ein Modell eines Plättchens mit den Maßen 3*20*1 mm³ aus einem Copolyamid - Pulver (VESTAMELT 170, Degussa AG, Marl) hergestellt. Als Absorber wird eine auf KHP (Vestodur FP-LAS von Degussa) basierende Suspension verwendet, die 40 Massen-% destilliertes Wasser, 40 Massen-% KHP und 20. Massen-% Isopropanol aufweist. Die Vorrichtung hat eine Betriebstemperatur von ca. 40 °C. Die Wellenlänge des Diodenlasers mit den Abmessungen des Strahlflecks von 1,5 x 3,5 mm beträgt 940 nm. Die Schichtdicke beträgt 0,15 mm Pro Schicht wird der Diodenlaser mit 200 Watt Leistung mit einer Geschwindigkeit von 700 mm/sec zeilenweise über die Bauplattform bewegt Der D₅₀-Wert des Pulvers beträgt 60 µm.

### Beispiel 2: Herstellung eines Plättchens aus Polyamid 12 mittels Diodenlaser

In der schon beschriebenen Vorrichtung wird ein weiteres Plättchen mit den Maßen 3*20*1 mm³ aus einem Polyamid 12-Pulver (EOSINT P PA 2200, EOS GmbH Electro Optical Systems, Krailling, Deutschland) hergestellt. Als Absorber kommt Iriodin® LS 825 zum Einsatz. Die mit dem Inkjetverfahren verteilte Flüssigkeit bestand zu 30 Gewichtsprozent aus Iriodin, 59 % Isopropanol und 1 % Pril (Henkel). Die Vorrichtung hat eine Betriebstemperatur von ca. 160 °C. Die Wellenlänge des flächigen Diodenlasers beträgt 940 nm und der Strahlfleck beträgt 1,5 x 3,5 mm. Die Höhe, in der die Pulverschichten aufgetragen wurden, betrug 0,15 mm. Pro Schicht fährt der Diodenlaser die Bauebene zeilenweise mit 200 Watt Leistung und einer Geschwindigkeit von 500 mm/sec ab. Das verwendete Pulver wies einen d₅₀- Wert von 55 µm auf.

### Beispiel 3: Herstellung eines Plättchens aus Polyamid 12 mittels Nd:YAG-Laser

Ein 10x10 cm oben offener Kasten wurde mit einem Boden versehen, der über eine Spindel verfahrbar ist Der Boden wurde bis auf einen halben Zentimeter an die obere Kante bewegt; der verbliebene Raum wurde mit Pulver gefüllt und mit einer Metallplatte glattgestrichen. Die Apparatur wurde in den Bauraum eines Nd:YAG-Lasers Star Mark 65 (Hersteller Carl Basel Lasertechnik) gestellt. Die Öffnung des Kastens wurde zur Hälfte abgedeckt und mit einem Zerstäuber (handelsüblich, für Parfum) wurde die Absorber aufweisende Flüssigkeit aufgetragen. Dabei ist auf eine gleichmäßige Benetzung zu achten sowie auf die Vermeidung von Tropfen. Danach wurde die Abdeckung entfernt, und die gesamte Fläche wurde mit der Laserenergie bestrichen.

Die nächsten Schritte, Drehung der Spindel zum Absenken des Bodens um 0,1 mm sowie Auftrag der nächsten Pulverschicht, glattstreichen, abdecken und zur Hälfte mit dem Absorber belegen, die Abdeckung entfernen und anschließend erneutes Belichten durch den Nd:YAG-Laser zum Aufschmelzen des Pulvers, wurden einige Male wiederholt

Das verwendete Polymer war ein Polyamid 12 der Degussa, nämlich ein Vestosint 2157. Als Absorber kommt Printex 60 , ebenfalls Degussa, zum Einsatz. Dabei wurden 10 Teile Printex 60 mit 70 Teilen destilliertem Wasser 18 Teilen Isopropanol und 2 Teilen Pril (Henkel) gemischt. Die Vorrichtung hat eine Betriebstemperatur von ca. 165 C. Die Wellenlänge des Nd:YAG-Lasers beträgt 1,064 nm. Pro Schicht fährt der Nd:YAG-Laser die Bauebene selektiv mit 30 Watt Leistung und einer Geschwindigkeit von 300 m/sec ab. Das verwendete Pulver wies einen d₅₀-Wert von 55 µm auf. Bei diesem Versuch konnte ein Plättchen aus dem mit Absorber versehenen Bereich hergestellt werden. Das nicht mit Absorber versetzte Pulver schmolz nicht auf. Besonders die Temperaturführung war jedoch noch zu optimieren, da durch das nicht automatisierte Handling und den Auftrag kalten Absorbers Curl auftrat.

## Patentansprüche

1. Verfahren zur Herstellung eines dreidimensionalen Objektes durch Bereitstellen einer Schicht eines pulverförmigen Substrates (2) und Einsatz von Lasern (5), wobei das selektive Aufschmelzen von Bereichen der Pulverschicht mittels Einbringung von elektromagnetischer Energie durch Laser (5) mit einer Wellenlänge zwischen 100 und 3000 nm erfolgt,
**dadurch gekennzeichnet,**
**dass** ein Absorber (4) in einer Suspension oder ein flüssiger Absorber per Inkjet-Verfahren selektiv auf die zu versinternden Bereiche aufgetragen wird.

2. Verfahren zur Herstellung eines dreidimensionalen Objektes nach Anspruch 1,
**dadurch gekennzeichnet,**
**dass** es die Schritte
a) Bereitstellen einer Schicht eines pulverförmigen Substrates (2)
b) Temperieren des Bauraumes
c) Auftragen eines Absorbers (4) in einer Suspension oder eines flüssigen Absorbers per Inkjet-Verfahren selektiv auf die zu versinternden Bereiche
d) Auftragen weiterer spezieller Flüssigkeiten oder Suspensionen mit bestimmten Eigenschaften
e) Selektives Aufschmelzen von Bereichen der Pulverschicht mittels Einbringung von elektromagnetischer Energie durch Laser (5) mit einer Wellenlänge zwischen 100 und 3000 nm
f) Abkühlen der geschmolzenen und nicht aufgeschmolzenen Bereiche auf eine Temperatur, die eine zerstörungsfreie Entnahme der Formteile ermöglicht
g) Entnahme der Formteile
umfasst.

3. Verfahren nach Anspruch 2,
**dadurch gekennzeichnet,**
**dass** zu Beginn einmal der Schritt e) durchgeführt wird, nachdem einmal Schritt a) bis d), anschließend Schritt b) und darauffolgend noch einmal Schritt a) durchgeführt worden ist und anschließend die weiteren Schritte in der Reihenfolge c), d), a), b) und e) durchgeführt werden.

4. Verfahren nach einem der vorhergehenden Ansprüche,
**dadurch gekennzeichnet,**
**dass** das eingesetzte pulverförmige Substrat eine mittlere Korngröße von 10 bis 150 µm aufweist.

5. Verfahren nach zumindest einem der vorhergehenden Ansprüche,
**dadurch gekennzeichnet,**
**dass** ein Laser mit der Wellenlänge zwischen 800 und 1070 nm eingesetzt wird.

6. Verfahren nach zumindest einem der Ansprüche 1 bis 4,
**dadurch gekennzeichnet,**
**dass** ein Laser mit der Wellenlänge zwischen 1900 und 2100 nm eingesetzt wird.

7. Verfahren nach zumindest einem der Ansprüche 1 bis 4,
**dadurch gekennzeichnet,**
**dass** ein Nd:YAG-Laser eingesetzt wird.

8. Verfahren nach zumindest einem der Ansprüche 1 bis 4,
**dadurch gekennzeichnet,**
**dass** ein Diodenlaser eingesetzt wird.

9. Verfahren nach zumindest einem der Ansprüche 1 bis 4,
**dadurch gekennzeichnet,**
**dass** ein Laser mit nicht fokussiertem, länglichen oder flächigern Strahl eingesetzt wird.

10. Verfahren nach zumindest einem der vorhergehenden Ansprüche,
**dadurch gekennzeichnet,**
**dass** der Absorber Farbmittel aufweist.

11. Verfahren nach Anspruch 10,
**dadurch gekennzeichnet,**
**dass** der Absorber Pigmente aufweist.

12. Verfahren nach Anspruch 10,
**dadurch gekennzeichnet,**
**dass** der Absorber Farbstoffe aufweist.

13. Verfahren nach zumindest einem der Ansprüche 1 bis 9,
**dadurch gekennzeichnet,**
**dass** der Absorber Ruß, KHP, Knochenkohle, Graphit, Kohlenstofffasern, Kreide oder Interferenzpigmente aufweist.

14. Verfahren nach zumindest einem der Ansprüche 1 bis 9,
**dadurch gekennzeichnet,**
**dass** der Absorber neben Ruß, KHP, Knochenkohle, Graphit, Kohlenstofffasern, Kreide oder Interferenzpigmenten weitere Komponenten aufweist.

15. Verfahren nach zumindest einem der Ansprüche 1 bis 9,
**dadurch gekennzeichnet,**
**dass** der Absorber Flammschutzmittel basierend auf Phosphor oder Melamincyanurat aufweist.

16. Verfahren nach zumindest einem der Ansprüche 10 bis 15,
**dadurch gekennzeichnet**,
der Absorber zusätzlich destilliertes Wasser, oder Alkohol oder Lösemittel aufweist.

17. Verfahren nach zumindest einem der Ansprüche 10 bis 15,
**dadurch gekennzeichnet**,
der Absorber zusätzlich ein Tensid und/oder Netzmittel und/oder Biozid und/oder Feuchthaltemittel enthält.

18. Verfahren nach einem der Ansprüche 1 bis 17,
**dadurch gekennzeichnet,**
**dass** als pulverförmiges Substrat Polymere eingesetzt werden.

19. Verfahren nach einem der Ansprüche 1 bis 17,
**dadurch gekennzeichnet,**
**dass** als pulverförmiges Substrat Sand, Metall-, oder Keramikpartikel, welche mit einem polymeren Material ummantelt sind, eingesetzt werden.

20. Verfahren nach Anspruch 18 oder 19,
**dadurch gekennzeichnet,**
**dass** das Polymer ein Polymer oder Copolymer, vorzugsweise ausgewählt aus Polyester, Polyvinylchlorid, Polyacetal, Polypropylen, Polyethylen, Polystyrol, Polycarbonat, Polybutylenterephthalat, Polyethylenterephthalat, Polysulfon, Polyarylenether, Polyurethan, thermoplastische Elastomere, Polylactide, Polyoxyalkylene, Poly-(N-methylmethacrylimide) (PMMI), Polymethylmethacrylat (PMMA), Ionomer, Polyamid, Copolyester, Copolyamide, Silikonpolymere, Terpolymere, Acrylnitril-Butadien-Styrol-Copolymere (ABS)oder Gemische davon, eingesetzt werden.

21. Verfahren nach einem der Ansprüche 18 bis 20,
**dadurch gekennzeichnet,**
**dass** ein pulverförmiges Substrat eingesetzt wird, welches von 0,05 bis 5 Gew.-% einer Rieselhilfe aufweist.

22. Verfahren nach einem der Ansprüche 18 bis 21,
**dadurch gekennzeichnet,**
**dass** ein pulverförmiges Substrat eingesetzt wird, das anorganische Füllkörper aufweist.

23. Verfahren nach Anspruch 22,
**dadurch gekennzeichnet,**
**dass** als Füllkörper Glaskugeln eingesetzt werden.

24. Verfahren nach zumindest einem der Ansprüche 18 bis 23,
**dadurch gekennzeichnet,**
**dass** ein pulverförmiges Substrat eingesetzt wird, das anorganische oder organische Pigmente aufweist.

## Claims

1. A process for producing a three-dimensional object by providing a layer of a pulverulent substrate (2) and using lasers (5), wherein an absorber (4) in a suspension or a liquid absorber is selectively applied via an inkjet process to the regions to be sintered, the selective melting of regions of the powder layer being effected by means of introduction of electromagnetic energy via a laser (5) of wavelength from 100 to 3000 nm.

2. The process for producing a three-dimensional object according to claim 1,
which comprises
the steps of
a) providing a layer of a pulverulent substrate (2).
b) controlling the temperature of the manufacturing chamber
c) selective application of an absorber (4) in a suspension or of a liquid absorber via an inkjet process to the regions to be sintered
d) application of other specific liquids or suspensions with certain properties
e) selective melting of regions of the powder layer by means of introduction of electromagnetic energy via a laser (5) of wavelength from 100 to 3000 nm
f) cooling of the molten and non-molten regions to a temperature which allows the moldings to be removed intact
g) removal of the moldings.

3. The process according to claim 2,
wherein
step e) is first carried out once, and then steps a) to d) are carried out once, and then step b) is carried out and step a) is carried out again once, and then the other steps are carried out in the sequence c), d), a), b), and e).

4. The process according to any one of the preceding claims,
wherein
the pulverulent substrate used has a median grain size of from 10 to 150 µm.

5. The process according to at least one of the preceding claims,
wherein
use is made of a laser of wavelength from 800 to 1070 nm.

6. The process according to at least one of claims 1 to 4,
wherein
use is made of a laser of wavelength from 1900 to 2100 nm.

7. The process according to at least one of claims 1 to 4,
wherein
use is made of an Nd:YAG laser.

8. The process according to at least one of claims 1 to 4,
wherein
use is made of a diode laser.

9. The process according to at least one of claims 1 to 4,
wherein
use is made of a laser with unfocused, linear or spread beam.

10. The process according to at least one of the preceding claims,
wherein
the absorber comprises colorants.

11. The process according to claim 10,
wherein
the absorber comprises pigments.

12. The process according to claim 10,
wherein
the absorber comprises dyes.

13. The process according to at least one of claims 1 to 9,
wherein
the absorber comprises carbon black, CHP, animal charcoal, graphite, carbon fibers, chalk, or interference pigments.

14. The process according to at least one of claims 1 to 9,
wherein
the absorber comprises other components alongside carbon black, CHP, animal charcoal, graphite, carbon fibers, chalk, or interference pigments.

15. The process according to at least one of claims 1 to 9,
wherein
the absorber comprises flame retardants based on phosphorus or melamine cyanurate.

16. The process according to at least one of claims 10 to 15,
wherein
the absorber also comprises distilled water, or alcohol, or solvent.

17. The process according to at least one of claims 10 to 15,
wherein
the absorber also comprises a surfactant and/or wetting agent and/or biocide and/or moisture retainer.

18. The process according to any one of claims 1 to 17,
wherein
the pulverulent substrate used comprises polymers.

19. The process according to any one of claims 1 to 17,
wherein
the pulverulent substrate used comprises sand, metal particles, or ceramic particles, which have been encapsulated by a polymeric material.

20. The process according to claim 18 or 19,
wherein
the polymer is a homo- or copolymer preferably selected from polyester, polyvinyl chloride, polyacetal, polypropylene, polyethylene, polystyrene, polycarbonate, polybutylene terephthalate, polyethylene terephthalate, polysulfone, polyarylene ether, polyurethane, thermoplastic elastomers, polylactides, polyoxyalkylenes, poly(N-methylmethacrylimides) (PMMI), polymethyl methacrylate (PMMA), ionomer, polyamide, copolyester, copolyamides, silicone polymers, terpolymers, acrylonitrile-butadiene-styrene copolymers (ABS), and mixtures thereof.

21. The process according to any of claims 18 to 20,
wherein
use is made of a pulverulent substrate which comprises from 0.05 to 5% by weight of a powder-flow aid.

22. The process according to any of claims 18 to 21,
wherein
use is made of a pulverulent substrate which comprises inorganic fillers.

23. The process according to claim 22,
wherein
the filler used comprises glass beads.

24. The process according to at least one of claims 18 to 23,
wherein
use is made of a pulverulent substrate which comprises inorganic or organic pigments.

## Revendications

1. Procédé pour fabriquer un objet tridimensionnel en mettant à disposition une couche d'un substrat pulvérulent (2) et en utilisant des lasers (5), dans lequel la fusion sélective de zones de la couche pulvérulente s'effectue au moyen d'un apport d'énergie électromagnétique par des lasers (5), ayant une longueur d'onde comprise entre 100 et 3000 nm,
**caractérisé en ce que** l'on applique un agent absorbant (4) en suspension ou un agent absorbant liquide, par un procédé à jet d'encre, de manière sélective sur les zones à fritter.

2. Procédé pour fabriquer un objet tridimensionnel selon la revendication 1, **caractérisé en ce qu'**il comprend les étapes suivantes :
a) la mise à disposition d'une couche d'un substrat pulvérulent (2),
b) l'équilibrage de température de l'espace de construction,
c) l'application d'un agent absorbant (4) en suspension ou d'un agent absorbant liquide par un procédé à jet d'encre de manière sélective sur les zones à fritter,
d) l'application d'autres liquides spéciaux ou suspensions spéciales ayant des propriétés déterminées,
e) la fusion sélective de zones de la couche pulvérulente au moyen d'un apport d'énergie électromagnétique par des lasers (5), ayant une longueur d'onde comprise entre 100 et 3000 nm,
f) le refroidissement des zones fondues et non fondues à une température qui permet de retirer les pièces moulées sans détérioration,
g) le retrait des pièces moulées.

3. Procédé selon la revendication 2, **caractérisé en ce que** l'on effectue, au début, une fois l'étape e) après avoir effectué une fois les étapes a) à d), ensuite l'étape b) puis encore une fois l'étape a), puis l'on effectue ensuite les autres étapes dans l'ordre c), d), a), b) et e).

4. Procédé selon l'une quelconque des revendications précédentes, **caractérisé en ce que** le substrat pulvérulent utilisé présente une taille granulaire moyenne de 10 à 150 µm.

5. Procédé selon au moins l'une quelconque des revendications précédentes, **caractérisé en ce que** l'on utilise un laser avec une longueur d'onde comprise entre 800 et 1070 nm.

6. Procédé selon au moins l'une quelconque des revendications 1 à 4, **caractérisé en ce que** l'on utilise un laser avec une longueur d'onde comprise entre 1900 et 2100 nm.

7. Procédé selon au moins l'une quelconque des revendications 1 à 4, **caractérisé en ce que** l'on utilise un laser de type Nd:YAG.

8. Procédé selon au moins l'une quelconque des revendications 1 à 4, **caractérisé en ce que** l'on utilise un laser à diode.

9. Procédé selon au moins l'une quelconque des revendications 1 à 4, **caractérisé en ce que** l'on utilise un laser avec un faisceau non focalisé, allongé ou plan.

10. Procédé selon au moins l'une quelconque des revendications précédentes, **caractérisé en ce que** l'agent absorbant présente des agents colorants.

11. Procédé selon la revendication 10, **caractérisé en ce que** l'agent absorbant présente des pigments.

12. Procédé selon la revendication 10, **caractérisé en ce que** l'agent absorbant présente des colorants.

13. Procédé selon au moins l'une quelconque des revendications 1 à 9, **caractérisé en ce que** l'agent absorbant présente de la suie, du KHP, du charbon d'os, du graphite, des fibres de carbone, de la craie ou des pigments d'interférence.

14. Procédé selon au moins l'une quelconque des revendications 1 à 9, **caractérisé en ce que** l'agent absorbant présente d'autres composants outre la suie, le KHP, le charbon, d'os, le graphite, les fibres de carbone, la craie ou les pigments d'interférence.

15. Procédé selon au moins l'une quelconque des revendications 1 à 9, **caractérisé en ce que** l'agent absorbant présente des agents ignifuges à base de phosphore ou de cyanurate de mélamine.

16. Procédé selon au moins l'une quelconque des revendications 10 à 15, **caractérisé en ce que** l'agent absorbant présente en plus de l'eau distillée, de l'alcool ou des solvants.

17. Procédé selon au moins l'une quelconque des revendications 10 à 15, **caractérisé en ce que** l'agent absorbant contient en plus un tensio-actif et/ou un agent mouillant et/ou un biocide et/ou un agent humidifiant.

18. Procédé selon l'une quelconque des revendications 1 à 17, **caractérisé en ce que** l'on utilise des polymères comme substrat pulvérulent.

19. Procédé selon l'une quelconque des revendications 1 à 17, **caractérisé en ce que** l'on utilise comme substrat pulvérulent du sable, des particules métalliques ou céramiques qui sont enveloppées d'un matériau polymère.

20. Procédé selon la revendication 18 ou 19, **caractérisé en ce que**, comme polymère, on utilise un polymère ou un copolymère choisi de préférence dans le groupe constitué des substances suivantes : polyesters, poly(chlorure de vinyle), polyacétal, polypropylène, polyéthylène, polystyrène, polycarbonate, poly(téréphtalate de butylène), poly(téréphtalate d'éthylène), polysulfone, polyarylène-éther, polyuréthane, élastomères thermoplastiques, polylactides, polyoxyalkylènes, poly-(N-méthylméthacrylimides) (PMMI), poly(méthacrylate de méthyle) (PMMA), ionomère, polyamide, copolyester, copolyamides, polymères de silicone, terpolymères, copolymères de type acrylonitrile-butadiène-styrène (ABS) ou leurs mélanges.

21. Procédé selon l'une quelconque des revendications 18 à 20, **caractérisé en ce que** l'on utilise un substrat pulvérulent qui présente 0,05 à 5 % en poids d'un antiagglomérant.

22. Procédé selon l'une quelconque des revendications 18 à 21, **caractérisé en ce que** l'on utilise un substrat pulvérulent qui présente des charges inorganiques.

23. Procédé selon la revendication 22, **caractérisé en ce que** l'on utilise des billes de verre comme charges.

24. Procédé selon au moins l'une quelconque des revendications 18 à 23, **caractérisé en ce que** l'on utilise un substrat pulvérulent qui présente des pigments inorganiques ou organiques.
